# EUROPEAN PATENT SPECIFICATION

(11) **EP 4 492 089 B1**
(45) Date of publication and mention of the grant of the patent: **25.11.2026**
(21) Application number: 23185009.0
(22) Date of filing: 12.07.2023
(51) Int. Cl.: G01S 13/56, G01S 13/88, G01S 13/60, G01S 7/41

(54) **SYSTEMS AND METHODS FOR THE DETECTION OF OBSTRUCTING OBJECTS DURING THE MOVEMENT OF A DOOR LEAF**
SYSTEME UND VERFAHREN ZUR ERKENNUNG VON HINDERNISSEN WÄHREND DER BEWEGUNG EINES TÜRFLÜGELS
SYSTÈMES ET PROCÉDÉS DE DÉTECTION D'OBSTRUCTION D'OBJETS PENDANT LE MOUVEMENT D'UN BATTANT DE PORTE

(43) Date of publication of application: 15.01.2025
(73) Proprietor: Pepperl+Fuchs SE, 68307 Mannheim (DE)
(72) Inventor: ASGHAR, Sayed Zeeshan, 12277 Berlin (DE)
(74) Representative: Fischer, Uwe

(56) References cited:
- CN-B- 108 979 440
- US-A1- 2020 284 876
- US-A1- 2023 018 226

## Description

The invention relates to systems comprising sensors to detect obstructing objects during the movement of a door leaf as well as methods for detecting obstructing objects during the movement of door leaves.

### Background of the invention

Sensors for the detection of obstructing objects during the movement of door leaves are known in the art as well as methods of detecting obstructing objects during the movement of door leaves.

Radar systems are for instance described in US 2023/018226 A1 and CN 108979440 B.

A system comprising the features of the preamble of claim 1 and a method according to the preamble of claim 12 is described in US 2020/0284876 A1.

### Objective of the present invention

An objective of the present invention is to propose systems comprising a door leaf and a sensor which provides reliable information about obstructing objects.

A further objective of the present invention is to provide a method of detecting obstructing objects during the movement of door leaves.

### Brief summary of the invention

An embodiment of the present invention relates to a system according to claim 1.

Since the sensor is mounted on the door lead and moved together with the door leaf, stationary and moving obstructing objects can reliably be detected. For instance, in contrast to stationary radar units, the sensor can reliably detect also stationary objects because the movement of the radar unit causes a Doppler signal also for the non-moving objects.

Furthermore, an evaluation of the Doppler signal provided by the radar unit allows distinguishing obstructing objects with respect to their kinematic behaviour. For instance, approaching objects can be distinguished from stationary objects as well as from other objects that move away from the door leaf. The information about the kinematic behaviour can be used for instance to improve the control of the door's movement with regard to the avoidance of a collision.

The evaluation unit preferably calculates a threshold frequency that corresponds to the speed of the door leaf.

The evaluation unit may generate an object detection signal that indicates an object moving towards the door leaf if the spectrum of the Doppler spectrum comprises a response above the threshold frequency.

The evaluation unit may generate an object detection signal that indicates a stationary object if the spectrum of the Doppler spectrum comprises a response at the threshold frequency.

The evaluation unit may generate an object detection signal that indicates an object moving away from the door leaf if the spectrum of the Doppler spectrum comprises a response below the threshold frequency.

The calculation of the background data set preferably includes generating a plurality of data entries, each of which refers to a given position of the sensor and comprises a speed-normalized Doppler spectrum measured at the respective position, wherein the data entries collectively cover the movement of the door from the predefined start position to the predefined end position.

The background data set preferably comprises at least ten data entries that refer to ten different positions of the door leaf.

Each data entry preferably indicates the signal strength of the speed-normalized Doppler signal over the speed-normalized Doppler frequency.

The evaluation unit may be configured to evaluate a current speed-normalized Doppler spectrum at a current position of the door leaf by comparing the signal strength of the current speed-normalized Doppler spectrum with the data entry of the background data set that corresponds to said current position.

The evaluation unit is preferably configured to generate an object detection signal that indicates an obstructing object if the difference between the signal strength of the current speed-normalized Doppler spectrum and the speed-normalized Doppler spectrum of the corresponding data entry exceeds a given threshold with respect to at least one speed-normalized Doppler frequency.

The sensor may comprise a measurement unit configured to measure the acceleration of the door and generate an acceleration signal.

The evaluation unit may be configured to calculate the position of the door leaf based on the measured acceleration signal.

Another embodiment of the invention relates to a method according to claim 12.

The method is preferably carried out in or with respect to a system as disclosed above. Therefore, any features or subject matter disclosed with respect to the system discussed above also applies to the method according to the present invention, and vice versa.

### Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, the invention will be described and explained with additional specificity and detail by the use of the accompanying drawings in which
- Figs. 1 and 3: illustrates a first exemplary embodiment of a system according to the present invention,
- Figs 2 and 9: illustrates a second exemplary embodiment of a system according to the present invention, and
- Figs. 4-8 and 10: visualize exemplary embodiments of preferred methods of operation of the sensors depicted in Figures 1-3 and 9.

### Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.

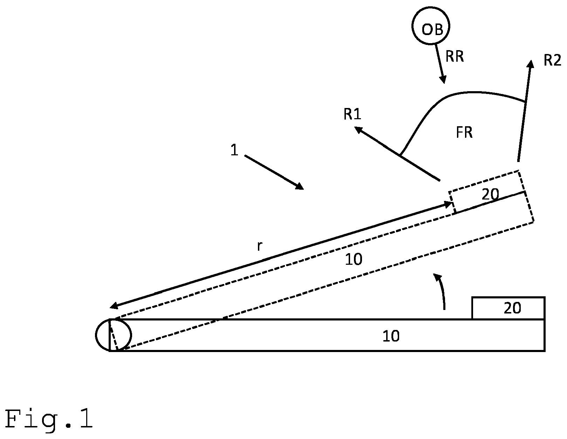

Figure 1 depicts a first exemplary embodiment of a system 1 according to the present invention.

The system 1 of Figure 1 comprises a door leaf 10 of a swing-door, and a sensor 20. The sensor 20 is mounted on the door leaf 10 and configured to detect obstructing objects during the movement of the door leaf 10. The sensor 20 is configured to emit radar radiation and detect radiation RR that is reflected by objects OB. In the exemplary embodiment of Figure 1, the emitted radar field FR is delimited by two radar beams R1 and R2.

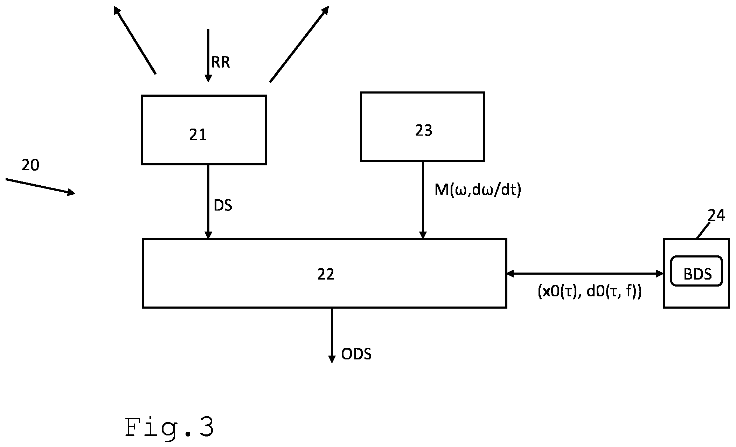

Figure 3 shows the sensor 20 of Figure 1 in further detail. The sensor 20 comprises a radar unit 21, an evaluation unit 22 and a measurement unit 23. The measurement unit 23 of Fig-ure 3 is an acceleration measurement device configured to measure the rotational acceleration dω/dt of the door leaf 10 and provide measurement values M that indicate the rotational speed ω and/or the rotational acceleration dω/dt of the door leaf 10. The measurement unit 23 may be a 1-axis (or more than one axis) gyroscope, preferably a MEMS gyroscope.

The radar unit 21 is configured to emit the radar field FR and detect the reflected radiation RR. The reflected radiation is processed in order to provide an output Doppler signal DS. The processing may include mixing an electrical detection signal that describes the detected radiation RR, with an electrical reference signal that describes the emitted radiation.

The spectrum of the Doppler signal DS indicates the presence of the reflecting objects OB as well as the relative speed between the door leaf 10 and the reflecting objects OB. Since the radar unit 21 is mounted on the door leaf 10 and is moved together with the door leaf 10, the speed of the door leaf 10 should be considered when the speed of reflecting objects OB is calculated.

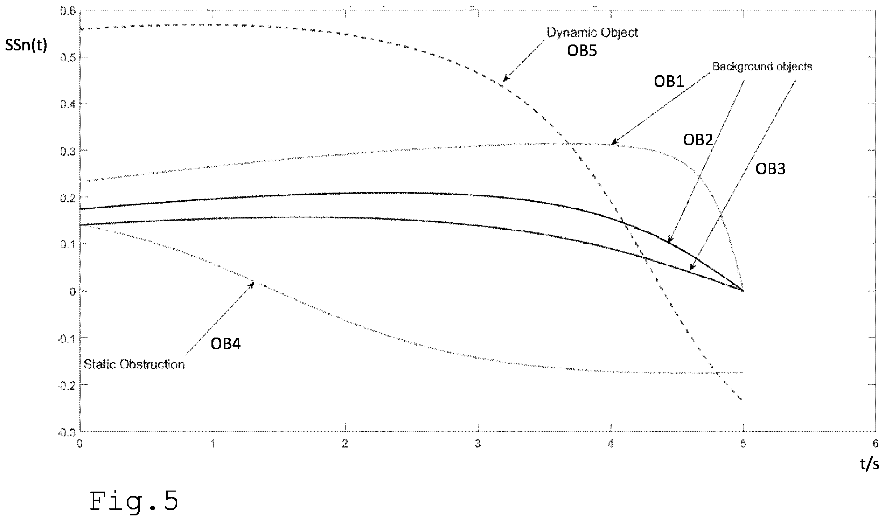

The evaluation unit 22 may comprise one or more processor(s) to evaluate the spectrum of the Doppler signal DS in order to calculate speed signals SS (see normalized speed signals SSn in Figure 5) that describe the speed of the detected objects. During this evaluation, the sensor's 20 speed is taken into account. If the spectrum of the Doppler signal DS indicates one or more obstructing objects a corresponding object detection signal ODS is generated.

The evaluation unit 22 combines the measurement values M from the gyroscope and the Doppler signal DS from the radar unit 21. The purpose of the gyroscope is to measure the rotation rate of the door. The radius or width (distance between the axis of the door leaf 10 and the sensor 20) may be communicated by service personnel as part of a calibration procedure. Alternatively, the sensor 20 may be configured to be installed at a pre-defined radius which is already implemented in the evaluation unit 22 as a constant value.

Once the radius is known, the velocity of the radar unit 21 at any point in time t can be calculated using the following equation: $v \left(t\right) = rω \left(t\right)$ where ω(t) represents the angular velocity which can be provided by the gyroscope or calculated by the evaluation unit 22 based on the measurement values M of the gyroscope. r represents the moment arm or the radius, **i.e.,** the distance of the radar unit 21 from the rotational axis of the door.

The reflected and thereafter detected radar radiation RR is influenced by the relative motion between the sensor 20 and the reflecting objects (stationary or moving objects). The individual speed of each detected object can be derived from the spectrum of the reflected radar radiation. Such a calculation may yield a speed signal SS(t) (see normalized speed signals SSn in Figure 5) for each detected object. The calculation of speed signals SS by evaluating the frequency spectrum of a detected Doppler signal DS is well known in the art.

The next step is to normalize the speed signals SS(t) and remove the door velocity v(t), for example according to the following equation: $SSn \left(t\right) = SS \left(t\right) - v \left(t\right)$ wherein SSn(t) designates the normalized speed signals. The door's velocity v(t) can be calculated based on the measurement values M provided by the gyroscope, as explained above.

Alternatively, the spectrum of the Doppler signal DS can be shifted by a frequency Fstatic that corresponds to the speed of the sensor 20 before calculating the speed signals. In the latter case, the normalized speed signals SSn can be directly calculated on the basis of the shifted spectrum.

Summarizing, the evaluation of the spectrum of the Doppler signal DS discloses the existence of objects as well as their respective relative speeds.

Figure 5 shows in an exemplary fashion the normalized speed signals SSn with respect to objects OB1-OB5 depicted in Fig-ure 4.

### Setup / Learning Step

During an initial setup, the background signal is measured and stored in a memory 24 of the sensor 20 for later use during the normal operation of the system 1.

The background signal may be measured and stored in the form of data pairs or data entries (x0(τ), d0(τ, f)). Each data entry refers to a given position x0 and defines the speed-normalized Doppler spectrum d0(τ, f) measured at the respective position x0 during the setup phase where no obstructing objects disturb the movement of the door leaf 10.

The data entries (x0(τ), d0(τ, f)) are preferably stored with respect to a time frame τ ∈ [0, T]. t=0 indicates the moment when the door opens during the beginning of the setup phase, and T indicates the time when the door is fully open and comes to rest at the end of the setup phase. In other words, x(t=0) refers to the closed door and x(t=T) refers to the fully opened door. d0(τ, f)) describes the speed-normalized Doppler spectrum of the detected radar signal measured at the time t=τ. The speed-normalized Doppler spectrum can be calculated by shifting the measured Doppler spectrum by a correction frequency Fstatic that corresponds to the speed of the sensor 20.

The two events τ = 0 and τ = T may be detected by evaluating the sensor's 20 speed v(t):
Once v(t) exceeds a predefined small threshold velocity above noise level, it is assumed that the door leaf 10 is going to be opened and the observation is started (τ = 0).

As soon as v(t) drops below the threshold velocity, it is assumed that the door is fully open (τ = T).

The resulting data pairs (x0(τ), d0(τ, f)), V τ ∈ {0, T}, describe a "background signal", which constitutes a signal generated by the floor or other stationary objects that are always present and are a part of the background.

The data pairs (x0(τ), d0(τ, f)), V τ ∈ {0, T}, collectively form a background data set BDS which is stored in the memory 24 of the sensor 20.

Once the initial setup process is complete, the actual operation can commence.

### Processing

When the door is opening during normal operation, and there is no object obstructing the door, the actual Doppler signal DS will be similar to the initially stored background signal described by the data pairs (x0(τ), d0(τ, f)) V τ ∈ {0, T}.

But when there is some obstruction because a new object is present, the detected spectrum will be different from the background signal.

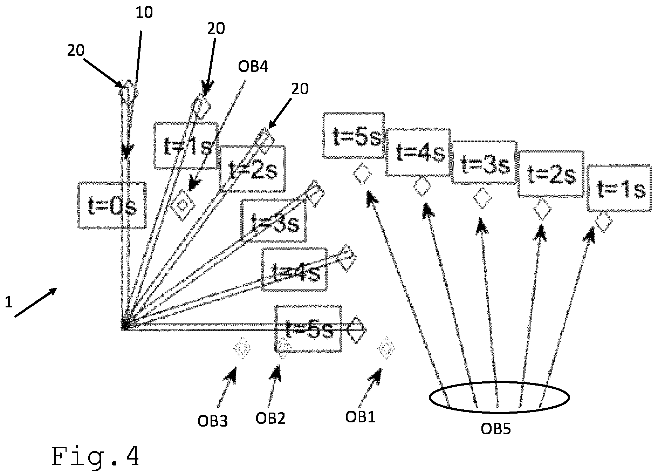

Figure 4 shows such a scenario where three background objects OB1, OB2 and OB3 are part of the background and therefore already included in the stored background signal. A static obstructing object OB4 is not part of the background and therefore not included in the stored background signal. Additionally, there is a moving object OB5 that moves towards the door and is depicted at different moments in times (t ∈ [0, ..., 5] seconds).

Figure 5 shows a simulated Doppler spectrum of the scenario depicted in Figure **4****.** In Figure 5, the radar radiation frequencies are already transformed into corresponding normalized speed signals SSn versus time t as the door moves.

In Figure 5, the static obstructing object OB4 initially generates a positive normalized speed signal. After circa 1 second, in the simulated scenario, the static obstructing object OB4 generates a negative normalized speed signal because the door has passed over the object.

The dynamic object OB3 approaches the sensor 20 and therefore continuously generates a positive normalized speed signal that can be easily detected.

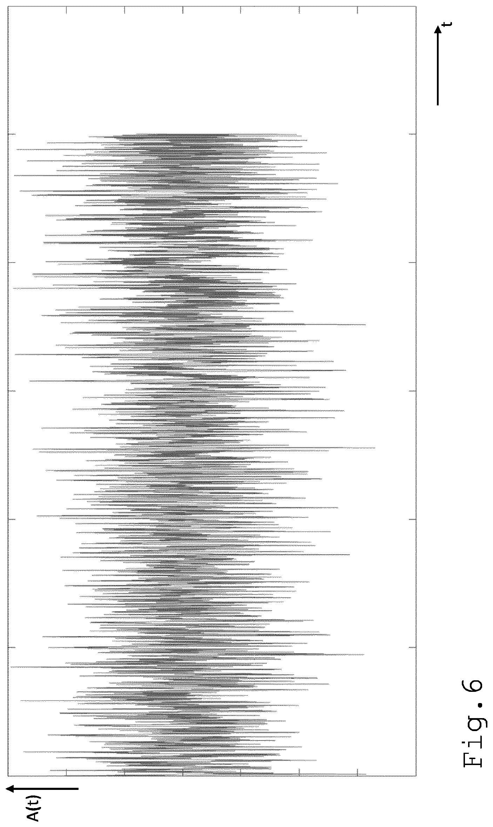

Figure 6 shows the amplitude A of an example Doppler signal DS captured by the radar unit 21 over time t. It is apparent that the Doppler signal DS requires further analysis for instance by Fourier-transformation.

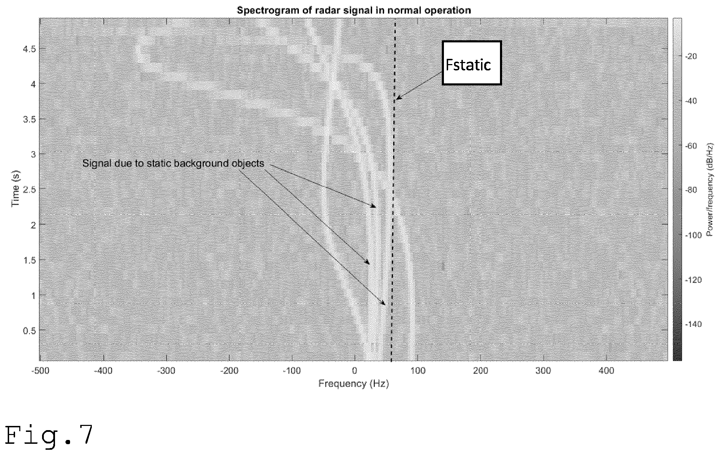

Figure 7 shows the signal of Figure 6 after Fourier-processing in form of a frequency-time plot. The frequency-time plot identifies the different objects OB1-OB5 as well as their individual speeds.

Figure 7 also depicts a threshold frequency Fstatic which describes and is proportional to the speed of the sensor 20.

### Approaching/receding objects collision avoidance

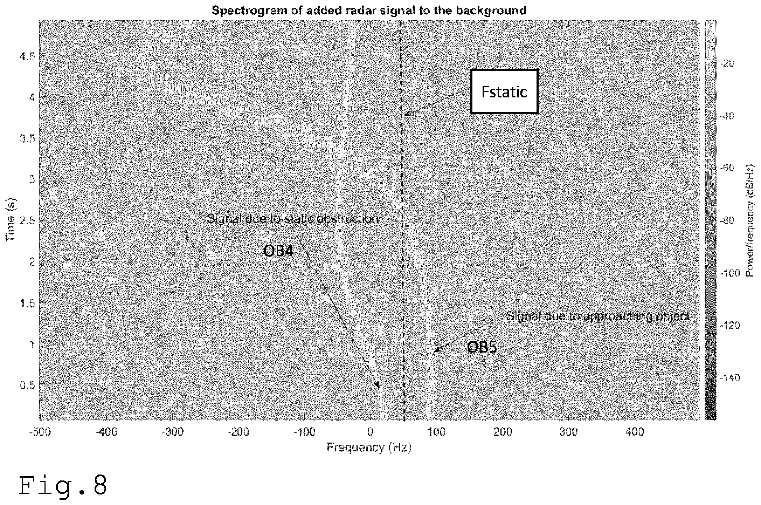

As shown in Figure 8, new objects OB4 and OB5 can be identified by evaluating the amplitudes of the speed-normalized Doppler spectrum and by comparing the actual speed-normalized Doppler spectrum with the stored background signal. In Figure 8, the background objects OB1, OB2 and OB3 that are shown in Figure 7, are omitted to facilitate the comparison.

Any Doppler frequency, for which the amplitude exceeds a given threshold amplitude and which is less than the threshold frequency Fstatic, is indicative of a dynamic object that is moving away from the sensor 20.

Any Doppler frequency, for which the amplitude exceeds said given threshold amplitude and which is equal to the threshold frequency Fstatic, is indicative of a static object.

Any Doppler frequency, for which the amplitude exceeds said given threshold amplitude and which exceeds the threshold frequency Fstatic, is indicative of a dynamic object moving towards the sensor 20.

Th information regarding the direction of moving objects can be very helpful in predicting the time of collision and taking a corrective action.

During the lifetime of the door operation, the motion profile of the door may change significantly due to wear and tear and the door-motor performance degradation. This may create a problem, if we store the background signal in terms of time τ (e.g., (τ, d0(τ, f)) instead of the location x0. Therefore, as discussed above, it is advantageous to store the data entries according to the position x0, which is backward calculated from the velocity of the door leaf 10 (see data entries (x0(τ), d0(τ, f)) discussed above.

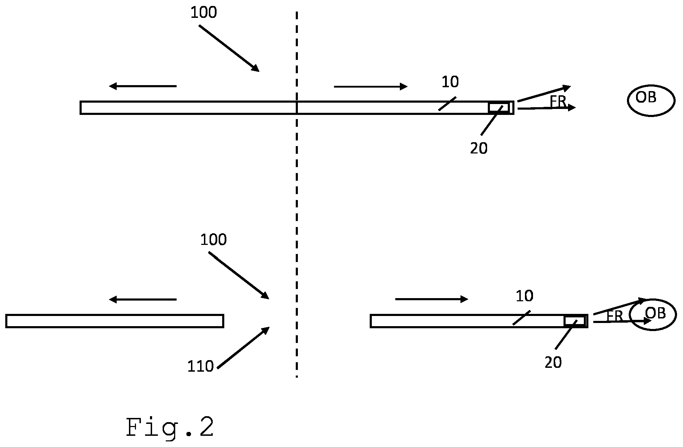

Figure 2 depicts a second exemplary embodiment of a system 1 according to the present invention. Here, the sensor 20 is mounted on the moving door leaf 10 of a sliding door 100 which provides a passage 110 in its open state.

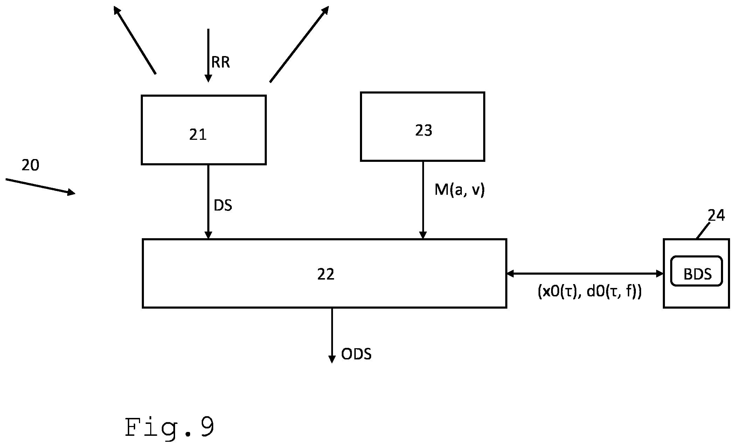

The sensor 20 comprises a measurement unit 23 (see Figure 9) which is a 1-axis accelerometer (or a more than one axis accelerometer). The measurement unit 23 generates measurement values M that describe the acceleration a of the sensor 20. The velocity v at t=τ of the door leaf 10 can be calculated using the following equation: $v \left(τ\right) = {\int }_{t = 0}^{τ} a \left(t\right) dt$

The calculation of the velocity v can be carried out by the measurement device 23 or the evaluation unit 22.

The position of the door, in local coordinate system (door initial position = (x(t) = 0)), may be calculated using the following equation: $x \left(τ\right) = {\int }_{t = 0}^{τ} v \left(t\right) dt$

In summary, the exemplary embodiments discussed above in connection with Figures 1-9 refer to systems 1 that comprises a door leaf 10 and a sensor 20 that is configured to detect obstructing objects during the movement of the door leaf 10. The sensor 20 comprises a radar unit 21 capable of emitting radar radiation and detecting reflected radiation RR. The radar unit 21 is mounted on the door leaf 10 and is moved together with the door leaf 10. The radar unit 21 is configured to provide a Doppler signal DS during operation. An evaluation unit 22 is configured to evaluate the spectrum of the Doppler signal DS taking the sensor's 20 speed into account, and to generate an object detection signal ODS based on the evaluation result.

The evaluation unit 22 calculates and stores a background data set BDS based on a Doppler signal DS that has been measured during a learning step (initial setup- phase).

The learning step includes moving the door leaf 10 from a predefined start position to a predefined end position wherein the movement takes place when no object obstructs the door's movement. The learning step further includes measuring the Doppler signal DS while the door leaf 10 is moved, over time.

The evaluation unit 22 may further calculate a threshold frequency Fstatic that corresponds to the speed of the door leaf 10.

The calculation of the background data set BDS includes calculating a speed-normalized Doppler spectrum by removing the door velocity from the measured Doppler signal DS. The removal of the door velocity from the measured Doppler signal DS can be carried out by shifting the measured Doppler signal DS by the threshold frequency Fstatic.

The calculation of the background data set BDS includes generating a plurality of data entries (x0(τ), d0(τ, f)). Each of the data entries (x0(τ), d0(τ, f)) refers to a possible position x0(τ) of the sensor 20 and comprises a Doppler spectrum (preferably a speed-normalized Doppler spectrum) measured at the respective position.

Each data entry (x0(τ), d0(τ, f)) preferably indicates the signal strength **(e.g.,** amplitude A) of the speed-normalized Doppler signal DS over the speed-normalized Doppler frequency.

The data entries (x0(τ), d0(τ, f)) collectively cover the movement of the door from the predefined start position to the predefined end position.

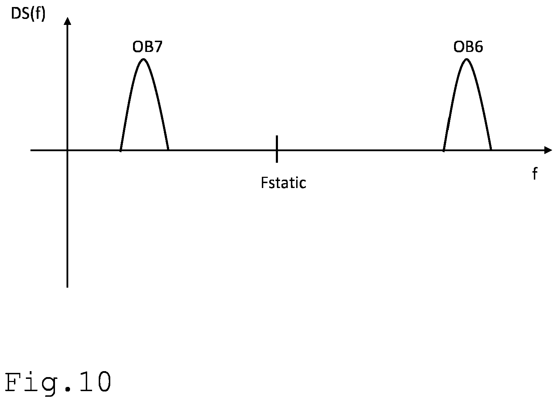

Figure 10 shows an exemplary embodiment of a Doppler spectrum that is measured at a current position x0(τ) of the sensor 20 after completion of the setup-phase. The spectrum illustrates an object OB6 that approaches the sensor 20, and an object OB7 that moves away from the sensor 20.

The evaluation unit 22 evaluates the current speed-normalized Doppler spectrum at the current position x0(τ) of the door leaf 10 by comparing the signal strength of the current speed-normalized Doppler spectrum with the data entry of the stored background data set BDS that corresponds to said current position.

The evaluation unit 22 generates an object detection signal ODS that indicates an obstructing object if the difference between the signal strength of the currently measured speed-normalized Doppler spectrum and the signal strength of stored speed-normalized Doppler spectrum of the corresponding stored data entry exceeds a given threshold with respect to at least one speed-normalized Doppler frequency.

In other words, the evaluation unit 22 generates an object detection signal ODS if the Doppler spectrum indicates a response from an object that is not expected in view of the stored background data set BDS. A response from an object is assumed if the amplitude of the Doppler spectrum exceeds a pre-defined threshold amplitude that preferably depends on the amplitude of the background data set BDS with regard to the respective position of the door leaf 10 and the same frequency. For instance, a response may be assumed if the actual amplitude of the Doppler spectrum exceed the stored amplitude with respect the same location x0 and the same frequency.

For instance, the evaluation unit 22 generates an object detection signal ODS that indicates an object OB6 (see Figure 10) moving towards the door leaf 10, if the Doppler spectrum DS(f) comprises a response above the threshold frequency Fstatic.

For instance, the evaluation unit 22 generates an object detection signal that indicates an object OB7 moving away from the door leaf 10, if the Doppler spectrum DS(f) comprises a response below the threshold frequency Fstatic.

For instance, the evaluation unit 22 generates an object detection signal ODS that indicates a stationary object, if the Doppler spectrum DS(f) indicates a response at the threshold frequency Fstatic.

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa. Whenever the context requires, all options that are listed with the word "and" shall be deemed to include the word "or" and vice versa, and any combination thereof.

## Claims

1. System (1) comprising a door leaf (10) and a sensor (20) configured to detect obstructing objects (O4-O7) during the movement of the door leaf (10),
wherein the sensor (20) comprises
- a radar unit (21) capable of emitting radar radiation and detecting reflected radiation (RR), wherein the radar unit (21) is mounted on the door leaf (10) and is moved together with the door leaf (10), the radar unit (21) being configured to provide a Doppler signal (DS) during operation, and
- an evaluation unit (22) configured to evaluate the spectrum of the Doppler signal (DS) and to generate an object detection signal (ODS) based on the evaluation result,
**characterized in that**
- the evaluation unit (22) is configured to calculate and store a background data set (BDS) based on a Doppler signal (DS) that has been measured during a learning step that includes moving the door leaf (10) from a predefined start position to a predefined end position wherein the movement takes place when no object (O4-O7) obstructs the door's movement, and measuring the Doppler signal (DS) while the door leaf (10) is moved, over time,
- wherein the calculation of the background data set (BDS) includes calculating a speed-normalized Doppler spectrum by removing the door velocity from the measured Doppler signal (DS), and
- wherein the evaluation of the spectrum of the Doppler signal (DS) includes taking the sensor's (20) speed into account.

2. The system (1) of claim 1
wherein the evaluation unit (22) calculates a threshold frequency (Fstatic) that corresponds to the speed of the door leaf (10).

3. The system (1) of claim 2
wherein the evaluation unit (22) generates an object detection signal (ODS) that indicates an object (O5-O6) moving towards the door leaf (10) if the spectrum comprises a response above the threshold frequency (Fstatic).

4. The system (1) of any of the preceding claims 2-3
wherein the evaluation unit (22) generates an object detection signal (ODS) that indicates a stationary object (O4-O7) if the spectrum comprises a response at the threshold frequency (Fstatic).

5. The system (1) of any of the preceding claims 2-4
wherein the evaluation unit (22) generates an object detection signal (ODS) that indicates an object (O6) moving away from the door leaf (10) if the spectrum comprises a response below the threshold frequency (Fstatic).

6. The system (1) of any of the preceding claims
wherein the calculation of the background data set (BDS) includes
- generating a plurality of data entries (x0(τ), d0(τ, f)), each of which refers to a given position of the sensor (20) and comprises the speed-normalized Doppler spectrum measured at the respective position,
- wherein the data entries (x0(τ), d0(τ, f)) collectively cover the movement of the door leaf (10) from the predefined start position to the predefined end position.

7. The system (1) of any of the preceding claims
wherein
- the background data set (BDS) comprises at least ten data entries (x0(τ), d0(τ, f)) that refer to ten different positions of the door leaf (10).

8. The system (1) of any of the preceding claims 6-7
wherein each data entry (x0(τ), d0(τ, f)) indicates the signal strength of the speed-normalized Doppler signal (DS) over the speed-normalized Doppler frequency.

9. The system (1) of any of the preceding claims 6-8 wherein the evaluation unit (22) is configured to evaluate a current speed-normalized Doppler spectrum at a current position (x0(τ)) of the door leaf (10) by comparing the signal strength of the current speed-normalized Doppler spectrum with the data entry (x0(τ), d0(τ, f)) of the background data set (BDS) that corresponds to said current position.

10. The system (1) of any of the preceding claims 6-9 wherein the evaluation unit (22) is configured to generate an object detection signal (ODS) that indicates an obstructing object (O4-O7) if the difference between the signal strength of a current speed-normalized Doppler spectrum and the speed-normalized Doppler spectrum of the corresponding data entry (x0(τ), d0(τ, f)) exceeds a given threshold with respect to at least one speed-normalized Doppler frequency.

11. The system (1) of any of the preceding claims
- wherein the sensor (20) comprises a measurement unit (23) configured to measure the acceleration of the door and generate an acceleration signal, and
- wherein the evaluation unit (22) is configured to calculate the position of the door leaf (10) based on the measured acceleration signal.

12. Method of detecting obstructing objects (O4-O7) during the movement of a door leaf (10),
comprising the steps of
- emitting radar radiation and detecting reflected radiation (RR) using a radar unit (21), wherein the radar unit (21) is mounted on the door leaf (10) and is moved together with the door leaf (10), the radar unit (21) being configured to provide a Doppler signal (DS) during operation, and
- evaluating the spectrum of the Doppler signal (DS), and to generate an object detection signal (ODS) based on the evaluation result.
**characterized by**
- calculating and storing a background data set (BDS) based on a Doppler signal (DS) that has been measured during a learning step that includes moving the door leaf (10) from a predefined start position to a predefined end position wherein the movement takes place when no object (O4-O7) obstructs the door's movement, and measuring the Doppler signal (DS) while the door leaf (10) is moved, over time,
- wherein the calculation of the background data set (BDS) includes calculating a speed-normalized Doppler spectrum by removing the door velocity from the measured Doppler signal (DS), and
- wherein the evaluation of the spectrum of the Doppler signal (DS) includes taking the sensor's (20) speed into account.

## Patentansprüche

1. System (1), das einen Türflügel (10) und einen Sensor (20) umfasst, der dazu ausgelegt ist, Hindernisse (O4-O7) während der Bewegung des Türflügels (10) zu detektieren,
wobei der Sensor (20) Folgendes umfasst:
- eine Radareinheit (21), die zum Emittieren einer Radarstrahlung und Detektieren einer reflektierten Strahlung (RR) in der Lage ist, wobei die Radareinheit (21) an dem Türflügel (10) montiert ist und zusammen mit dem Türflügel (10) bewegt wird, wobei die Radareinheit (21) dazu ausgelegt ist, während des Betriebs ein Dopplersignal (DS) bereitzustellen, und
- eine Auswertungseinheit (22), die dazu ausgelegt ist, das Spektrum des Dopplersignals (DS) zu bewerten und ein Objektdetektionssignal (ODS) basierend auf dem Auswertungsergebnis zu erzeugen,
**dadurch gekennzeichnet, dass**
- die Auswertungseinheit (22) dazu ausgelegt ist, einen Hintergrunddatensatz (BDS) basierend auf einem Dopplersignal (DS) zu berechnen und zu speichern, das während eines Lernschritts gemessen wurde, der das Bewegen des Türflügels (10) von einer vordefinierten Startposition zu einer vordefinierten Endposition beinhaltet, wobei die Bewegung stattfindet, wenn kein Objekt (O4-O7) die Bewegung der Tür behindert, und das Messen des Dopplersignals (DS), während der Türflügel (10) im Laufe der Zeit bewegt wird,
- wobei die Berechnung des Hintergrunddatensatzes (BDS) das Berechnen eines geschwindigkeitsnormierten Dopplerspektrums durch Entfernen der Türgeschwindigkeit aus dem gemessenen Dopplersignal (DS) beinhaltet, und
- wobei die Auswertung des Spektrums des Dopplersignals (DS) die Berücksichtigung der Geschwindigkeit des Sensors (20) beinhaltet.

2. System (1) nach Anspruch 1, wobei die Auswertungseinheit (22) eine Schwellenfrequenz (Fstatic) berechnet, die der Geschwindigkeit des Türflügels (10) entspricht.

3. System (1) nach Anspruch 2, wobei die Auswertungseinheit (22) ein Objektdetektionssignal (ODS) erzeugt, das ein Objekt (O5-O6) angibt, das sich in Richtung des Türflügels (10) bewegt, wenn das Spektrum eine Antwort über der Schwellenfrequenz (Fstatic) umfasst.

4. System (1) nach einem der vorhergehenden Ansprüche 2-3, wobei die Auswertungseinheit (22) ein Objektdetektionssignal (ODS) erzeugt, das ein stationäres Objekt (O4-O7) angibt, wenn das Spektrum eine Antwort bei der Schwellenfrequenz (Fstatic) umfasst.

5. System (1) nach einem der vorhergehenden Ansprüche 2-4, wobei die Auswertungseinheit (22) ein Objektdetektionssignal (ODS) erzeugt, das ein Objekt (O6) angibt, das sich von dem Türflügel (10) weg bewegt, wenn das Spektrum eine Antwort unterhalb der Schwellenfrequenz (Fstatic) umfasst.

6. System (1) nach einem der vorhergehenden Ansprüche, wobei die Berechnung des Hintergrunddatensatzes (BDS) Folgendes beinhaltet
- Erzeugen mehrerer Dateneinträge (x0(τ), d0(τ, f)), die sich jeweils auf eine gegebene Position des Sensors (20) beziehen und das an der jeweiligen Position gemessene geschwindigkeitsnormierte Dopplerspektrum umfassen,
- wobei die Dateneinträge (x0(τ), d0(τ, f)) gemeinsam die Bewegung des Türflügels (10) von der vorgegebenen Startposition in die vorgegebene Endposition abdecken.

7. System (1) nach einem der vorhergehenden Ansprüche, wobei
- der Hintergrunddatensatz (BDS) mindestens zehn Dateneinträge (x0(τ), d0(τ, f)) umfasst, die sich auf zehn verschiedene Positionen des Türflügels (10) beziehen.

8. System (1) nach einem der vorhergehenden Ansprüche 6-7, wobei jeder Dateneintrag (x0(τ), d0(τ, f)) die Signalstärke des geschwindigkeitsnormierten Dopplersignals (DS) über die geschwindigkeitsnormierte Dopplerfrequenz angibt.

9. System (1) nach einem der vorhergehenden Ansprüche 6-8, wobei die Auswertungseinheit (22) dazu ausgelegt ist, ein aktuelles geschwindigkeitsnormiertes Dopplerspektrum an einer aktuellen Position (x0(τ)) des Türflügels (10) durch Vergleichen der Signalstärke des aktuellen geschwindigkeitsnormierten Dopplerspektrums mit dem Dateneintrag (x0(τ), d0(τ, f)) des Hintergrunddatensatzes (BDS), der der aktuellen Position entspricht, auszuwerten.

10. System (1) nach einem der vorhergehenden Ansprüche 6-9, wobei die Auswertungseinheit (22) dazu ausgelegt ist, ein Objektdetektionssignal (ODS) zu erzeugen, das ein Hindernis (O4-O7) angibt, wenn die Differenz zwischen der Signalstärke eines aktuellen geschwindigkeitsnormierten Dopplerspektrums und dem geschwindigkeitsnormierten Dopplerspektrum des entsprechenden Dateneintrags (x0(τ), d0(τ, f)) eine gegebene Schwelle in Bezug auf mindestens eine geschwindigkeitsnormierte Dopplerfrequenz überschreitet.

11. System (1) nach einem der vorhergehenden Ansprüche
- wobei der Sensor (20) eine Messeinheit (23) umfasst, die dazu ausgelegt ist, die Beschleunigung der Tür zu messen und ein Beschleunigungssignal zu erzeugen, und
- wobei die Auswertungseinheit (22) dazu ausgelegt ist, die Position des Türflügels (10) basierend auf dem gemessenen Beschleunigungssignal zu berechnen.

12. Verfahren zum Detektieren von Hindernissen (O4-O7) während der Bewegung eines Türflügels (10),
umfassend die folgenden Schritte
- Emittieren von Radarstrahlung und Detektieren von reflektierter Strahlung (RR) unter Verwendung einer Radareinheit (21), wobei die Radareinheit (21) an dem Türflügel (10) montiert ist und zusammen mit dem Türflügel (10) bewegt wird, wobei die Radareinheit (21) dazu ausgelegt ist, während des Betriebs ein Dopplersignal (DS) bereitzustellen, und
- Auswerten des Spektrums des Dopplersignals (DS) und Erzeugen eines Objekterfassungssignals (ODS) basierend auf dem Auswertungsergebnis,
**gekennzeichnet durch**
- Berechnen und Speichern eines Hintergrunddatensatzes (BDS) basierend auf einem Dopplersignal (DS), das während eines Lernschritts gemessen wurde, der das Bewegen des Türflügels (10) von einer vordefinierten Startposition zu einer vordefinierten Endposition beinhaltet, wobei die Bewegung stattfindet, wenn kein Objekt (O4-O7) die Bewegung der Tür behindert, und Messen des Dopplersignals (DS), während der Türflügel (10) im Laufe der Zeit bewegt wird,
- wobei die Berechnung des Hintergrunddatensatzes (BDS) das Berechnen eines geschwindigkeitsnormierten Dopplerspektrums durch Entfernen der Türgeschwindigkeit aus dem gemessenen Dopplersignal (DS) beinhaltet, und
- wobei die Auswertung des Spektrums des Dopplersignals (DS) die Berücksichtigung der Geschwindigkeit des Sensors (20) beinhaltet.

## Revendications

1. Système (1) comprenant un vantail de porte (10) et un capteur (20) configuré pour détecter des objets faisant obstacle (O4-O7) pendant le mouvement du vantail de porte (10),
le capteur (20) comprenant
- une unité radar (21) apte à émettre un rayonnement radar et à détecter un rayonnement réfléchi (RR), l'unité radar (21) étant montée sur le vantail de porte (10) et se déplaçant conjointement avec le vantail de porte (10), l'unité radar (21) étant configurée pour fournir un signal Doppler (DS) pendant le fonctionnement, et
- une unité d'évaluation (22) configurée pour évaluer le spectre du signal Doppler (DS) et pour générer, sur la base du résultat d'évaluation, un signal de détection d'objet (ODS),
**caractérisé en ce que**
- l'unité d'évaluation (22) est configurée pour calculer et stocker un ensemble de données d'arrière-plan (BDS) sur la base d'un signal Doppler (DS) qui a été mesuré pendant une étape d'apprentissage qui comporte le déplacement du vantail de porte (10) depuis une position de départ prédéfinie jusqu'à une position d'arrivée prédéfinie, le déplacement ayant lieu lorsqu'aucun objet (O4-O7) n'entrave le mouvement de la porte, et la mesure du signal Doppler (DS) au cours du temps pendant que le vantail de porte (10) se déplace,
- dans lequel le calcul de l'ensemble de données d'arrière-plan (BDS) comporte le calcul d'un spectre Doppler normalisé en vitesse par suppression, du signal Doppler (DS) mesuré, de la vitesse de la porte, et
- dans lequel l'évaluation du spectre du signal Doppler (DS) comporte la prise en compte de la vitesse du capteur (20).

2. Système (1) selon la revendication 1, dans lequel l'unité d'évaluation (22) calcule une fréquence seuil (Fstatic) qui correspond à la vitesse du vantail de porte (10).

3. Système (1) selon la revendication 2, dans lequel l'unité d'évaluation (22) génère un signal de détection d'objet (ODS) qui indique un objet (O5-O6) se déplaçant vers le vantail de porte (10) si le spectre comprend une réponse au-dessus de la fréquence seuil (Fstatic).

4. Système (1) selon l'une quelconque des revendications 2 à 3 précédentes, dans lequel l'unité d'évaluation (22) génère un signal de détection d'objet (ODS) qui indique un objet immobile (O4-O7) si le spectre comprend une réponse à la fréquence seuil (Fstatic).

5. Système (1) selon l'une quelconque des revendications 2 à 4 précédentes, dans lequel l'unité d'évaluation (22) génère un signal de détection d'objet (ODS) qui indique un objet (O6) s'éloignant du vantail de porte (10) si le spectre comprend une réponse au-dessous de la fréquence seuil (Fstatic).

6. Système (1) selon l'une quelconque des revendications précédentes, dans lequel le calcul de l'ensemble de données d'arrière-plan (BDS) comporte
- la génération d'une pluralité d'entrées de données (x0(τ), d0(τ, f)) dont chacune se rapporte à une position donnée du capteur (20) et comprend le spectre Doppler normalisé en vitesse mesuré à la position respective,
- dans lequel les entrées de données (x0(τ), d0(τ, f)) couvrent collectivement le déplacement du vantail de porte (10) depuis la position de départ prédéfinie jusqu'à la position d'arrivée prédéfinie.

7. Système (1) selon l'une quelconque des revendications précédentes, dans lequel
- l'ensemble de données d'arrière-plan (BDS) comprend au moins dix entrées de données (x0(τ), d0(τ, f)) qui se rapportent à dix positions différentes du vantail de porte (10).

8. Système (1) selon l'une quelconque des revendications 6 à 7 précédentes, dans lequel chaque entrée de données (x0(τ), d0(τ, f)) indique l'intensité de signal du signal Doppler (DS) normalisé en vitesse en fonction de la fréquence Doppler normalisée en vitesse.

9. Système (1) selon l'une quelconque des revendications 6 à 8 précédentes, dans lequel l'unité d'évaluation (22) est configurée pour évaluer un spectre Doppler actuel normalisé en vitesse à une position actuelle (x0(τ)) du vantail de porte (10) en comparant l'intensité de signal du spectre Doppler actuel normalisé en vitesse à l'entrée de données (x0(τ), d0(τ, f)) de l'ensemble de données d'arrière-plan (BDS) qui correspond à ladite position actuelle.

10. Système (1) selon l'une quelconque des revendications 6 à 9 précédentes, dans lequel l'unité d'évaluation (22) est configurée pour générer un signal de détection d'objet (ODS) qui indique un objet faisant obstacle (O4-O7) si la différence entre l'intensité de signal d'un spectre Doppler actuel normalisé en vitesse et le spectre Doppler normalisé en vitesse de l'entrée de données correspondante (x0(τ), d0(τ, f)) dépasse un seuil donné pour au moins une fréquence Doppler normalisée en vitesse.

11. Système (1) selon l'une quelconque des revendications précédentes,
- dans lequel le capteur (20) comprend une unité de mesure (23) configurée pour mesurer l'accélération de la porte et générer un signal d'accélération, et
- dans lequel l'unité d'évaluation (22) est configurée pour calculer la position du vantail de porte (10) sur la base du signal d'accélération mesuré.

12. Procédé de détection d'objets faisant obstacle (O4-O7) pendant le mouvement d'un vantail de porte (10),
comprenant les étapes suivantes
- l'émission d'un rayonnement radar et la détection d'un rayonnement réfléchi (RR) au moyen d'une unité radar (21), l'unité radar (21) étant montée sur le vantail de porte (10) et se déplaçant conjointement avec le vantail de porte (10), l'unité radar (21) étant configurée pour fournir un signal Doppler (DS) pendant le fonctionnement, et
- l'évaluation du spectre du signal Doppler (DS) et la génération, sur la base du résultat d'évaluation, d'un signal de détection d'objet (ODS),
**caractérisé par**
- le calcul et le stockage d'un ensemble de données d'arrière-plan (BDS) sur la base d'un signal Doppler (DS) qui a été mesuré pendant une étape d'apprentissage qui comporte le déplacement du vantail de porte (10) depuis une position de départ prédéfinie jusqu'à une position d'arrivée prédéfinie, le déplacement ayant lieu lorsqu'aucun objet (O4-O7) n'entrave le mouvement de la porte, et la mesure du signal Doppler (DS) au cours du temps pendant que le vantail de porte (10) se déplace,
- dans lequel le calcul de l'ensemble de données d'arrière-plan (BDS) comporte le calcul d'un spectre Doppler normalisé en vitesse par suppression, du signal Doppler (DS) mesuré, de la vitesse de la porte, et
- dans lequel l'évaluation du spectre du signal Doppler (DS) comporte la prise en compte de la vitesse du capteur (20).
